# EUROPÄISCHE PATENTSCHRIFT

(11) **EP 0 994 793 B1**
(45) Veröffentlichungstag und Bekanntmachung des Hinweises auf die Patenterteilung: **27.02.2002**
(21) Anmeldenummer: 98943663.9
(22) Anmeldetag: 14.07.1998
(51) Int. Cl.: B60R 21/20

(54) **LENKRAD MIT AIRBAGMODUL**
STEERING WHEEL WITH AN AIRBAG MODULE
VOLANT AVEC MODULE AIRBAG

(30) Priorität: 16.07.1997 DE 19731314
(43) Veröffentlichungstag der Anmeldung: 26.04.2000
(73) Patentinhaber: TAKATA - PETRI Aktiengesellschaft, 63743 Aschaffenburg (DE)
(72) Erfinder: ULBRICH, Christian, D-80939 München (DE); LAUE, Andreas, D-63820 Elsenfeld (DE)
(74) Vertreter: Bärmann, Klaus, Dipl.-Ing.
(86) Internationale Anmeldenummer: DE9801897
(87) Internationale Veröffentlichungsnummer: WO9903710

(56) Entgegenhaltungen:
- EP-A- 0 560 355
- EP-A- 0 710 590
- DE-A- 3 925 761
- US-A- 5 235 146
- PATENT ABSTRACTS OF JAPAN vol. 016, no. 467 (M-1317), 29. September 1992 & JP 04 166458 A (TOYODA GOSEI CO LTD), 12. Juni 1992

## Beschreibung

Die Erfindung betrifft ein Lenkrad mit Airbagmodul nach dem Oberbegriff des Anspruchs 1.

Bei Kraftfahrzeuglenkrädern besteht aufgrund der starren Kopplung zur Lenksäule das Problem, daß zumindest in bestimmten Geschwindigkeitsbereichen am Lenkrad Vibrationen auftreten. Diese werden durch die Eigenfrequenz des Airbag-Lenkrades in Abhängigkeit zu einer bestimmten Motor-Drehzahl verursacht. Neben der Verschiebung der Eigenfrequenz des Airbag-Lenkrades durch Anbringen einer Zusatzmasse am Lankrad in einen Frequenzbereich, der außerhalb des Bereichs der tatsächlich auftretenden Schwingungen am Lenkrad liegt, ist zur Verringerung dieser Vibrationen z. B. aus der DE 37 10 173 A1 bekannt, das Gehäuse der Airbageinheit auf dem Lenkrad in der Weise gedämpft schwingend zu lagern, daß es gegenüber dem Lenkrad quer zur Längsachse der Lenksäule relativ bewegbar ist. Zusätzlich ist vorgesehen, daß das Gehäuse auch in Richtung der Längsachse der Lenksäule bewegbar ist. Erreicht wird die Bewegbarkeit dadurch, daß an den Seiten des Gehäuses Haltebügel angeordnet sind, die in entsprechenden Bohrungen Lagerbuchsen aufweisen, die geräuschdämpfende Eigenschaften haben. Durch die Lagerbuchsen sind Halteschrauben für die Befestigung der Haltebügel an den Speichen des Lenkrades geführt. Dabei ist zwischen dem Schaft jeder Halteschraube und der jeweiligen Buchse ein Freiraum vorhanden, der eine seitliche Verschiebung der Haltebügel gegenüber den Halteschrauben ermöglicht. Somit wird eine schwimmende Lagerung erzielt. Dabei ist das gesamte Airbagmodul einschließlich der Kappe, die es gegenüber dem Fahrgastraum abschirmt, schwimmend gelagert.

Der Nachteil dieser Anordnung besteht darin, daß beim Auftreten von Vibrationen am Lenkrad, diese Vibrationen u.a. durch die Relativbewegung der Kappe gegenüber dem Lenkrad sichtbar sind. Denn während das Lenkrad infolge der starren Kopplung mit der Lenkspindel schwingt, treten an der Kappe keine oder stark verringerte Vibrationen auf. Deshalb muß zwischen der Kappe und dem Lenkrad ein realtiv großer Spalt vorhanden sein, um die gegenseitige Reibung und damit lästige Geräusche beim Auftreten von Vibrationen zu vermeiden.

Der Erfindung liegt die Aufgabe zugrunde, bei einem Lenkrad eine Relativbewegung zwischen dem Lenkrad und einer gegenüber der Oberseite des Lenkrades getrennt angeordneten Kappe zur Abdeckung des Airbagmoduls gegenüber dem Fahrgastraum zumindest weitestgehend auszuschließen.

Erfindungsgemäß wird das gemäß den Merkmalen des Anspruchs 1 erreicht.

Bei einem Lenkrad mit Airbagmodul, das durch eine an der Lenkradoberseite vom Lenkrad getrennt verlaufende Kappe gegenüber dem Fahrgastraum abgedeckt ist, sind erfindungsgemäß das Airbagmodul und die Kappe getrennt voneinander im Bereich des Airbagmoduls am Lenkrad befestigt, wobei das Airbagmodul über mindestens ein Schwingungs- oder elastisches Element mit dem Lenkrad verbunden ist.

Bei dieser erfindungsgemäßen Anordnung ist das Airbagmodul bei Verwendung eines Schwingungselementes vom Lenkrad schwingungsentkoppelt, während die Kappe ohne Schwingungsentkopplung mit dem Lenkrad verbunden ist. Bei einer Vibration des Lenkrades schwingt die an der Lenkradoberseite getrennt vom Lenkrad verlaufende Kappe zusammen mit diesem, so daß zwischen beiden keine Relativbewegung vorhanden ist. Dadurch ist es möglich, den Spalt zwischen dem Lenkrad und der Kappe klein zu halten. Die Anbringung einer zusätzlichen Masse am Lenkrad zur Verschiebung der Eigenfrequenz ist nicht erforderlich.

Bei Verwendung mindestens eines elastischen Elementes wird durch eine Phasenverschiebung der Schwingung des Airbagmoduls die Eigenfrequenz des Gesamtsystems in Bereiche verschoben, die im Kraftfahrzeug unkritisch sind. Das wird insbesondere durch Abstimmung des Dämpfungswertes des elastischen Elements auf die Masse des schwingenden Moduls erreicht.

Als Baugruppen des Airbagmoduls sind ein Gasgenerator, ein Gassackhalteblech, ein Gassack und ein Faltraumbegrenzungsblech mit Abdeckung an mindestens einem Trägerblech befestigt, das über mindestens je eines der Schwingungs- oder elastischen Elemente mit dem Lenkrad verbunden ist.

Es ist zweckmäßig, daß zwischen dem Lenkrad und dem Schwingungs- oder elastischen Element ein Verbindungsblech vorgesehen ist.

Jedes Schwingungselement ist vorzugsweise buchsenförmig ausgebildet und auf einer Schraube mit Mutter angeordnet, wobei zwischen dem Schwingungselement und dem Schraubenkopf oder der Mutter ein Generatorträgerblech als Verbindungsblech befestigt ist, das mit dem Lenkradskelett verbunden ist und an dem die Kappe befestigt ist.

In einer weiteren Ausgestaltung ist vorgesehen, daß jedes Verbindungsblech an seinem oberen Ende hakenförmig umgebogen ist, und daß die Kappe einen in das Lenkrad hineinragenden Rand mit Durchbrüchen aufweist, in denen die oberen Enden der Verbindungsbleche verrastet sind.

Jedes Verbindungsblech kann direkt mit dem Lenkradskelett verbunden sein. In einer weiteren Ausgestaltung ist vorgesehen, daß jedes Verbindungsblech an einer Kontaktbrücke befestigt ist, die ihrerseits mit dem Lenkradskelett verbunden ist. In dieser Ausführungsform ist die Kappe über die Verbindungsbleche dann ebenfalls mit der Kontaktbrücke verbunden, so daß durch das Niederdrücken der Kappe in bekannter Weise Kontakte zum Betätigen der Hupe miteinander in Berührung gebracht werden.

Bei Verwendung elastischer Elemente sind vorzugsweise drei elastische Elemente im gleichen Winkelabstand angeordnet, die sich zwischen mindestens einem Trägerblech als Generatorträger und mindestens einem Verbindungsblech als Generatorhalteblech erstrecken.

In einer weiteren Ausführungsform ist ein ringförmiges elastisches Element zwischen der als Generatorträger ausgestalteten Lenkradnabe und dem Airbagmodul angeordnet.

Die Eigenschaft der elastischen Elemente ist so auf die Masse des schwingenden Airbagmoduls abgestimmt, daß durch eine Phasenverschiebung der Schwingung des Airbagmoduls die Eigenfrequenz des Gesamtsystems in unkritische Bereiche verschoben wird. Vorzugsweise sind die elastischen Elemente aus Elastomer hergestellt.

Die Erfindung soll in Ausführungsbeispielen anhand von Zeichnungen erläutert werden. Es zeigen:
- Fig. 1: einen Schnitt durch ein Lenkrad mit einem Airbagmodul, das auf Schwingungselementen und zur Betätigung der Hupe verschiebbar angeordnet ist.
- Fig. 2: einen Schnitt durch ein Lenkrad mit einem Airbagmodul, das auf einem elastischen Element und zur Betätigung der Hupe verschiebbar angeordnet ist.
- Fig. 3: einen Schnitt durch ein Lenkrad mit einem Airbagmodul, das fest auf einem elastischen Element angeordnet ist.

Ein Lenkrad 1 weist ein Lenkradskelett 2 auf, das mittels PUR-Schaum 3 verkleidet ist. Innerhalb des Lenkrades 1 ist ein Airbagmodul 4 angeordnet. Dieses weist einen Gasgenerator 5, ein Gassackhalteblech 6, einen Gassack 7 sowie ein Faltraumbegrenzungsblech 8 mit einer Abdeckung 9 auf. Diese Bauelemente des Airbagmoduls sind mittels Schrauben 10 an einem Trägerblech 11 befestigt, das in mehreren buchsenförmigen Schwingungselementen 12 als Entkopplungselemente gelagert ist. Diese sind über Verbindungsbleche 13 mittels Schrauben 15 mit einer Kontaktbrücke 22 verbunden, die ihrerseits mittels Schrauben 23 mit dem Lenkradskelett 2 verbunden sind. Die Schwingungselemente 12 sind an den Verbindungsblechen 13 mittels Schrauben 14 und Muttern 16 befestigt.

Vibrationen des Lenkrades 1 werden wegen der Schwingungselemente 12 nicht oder nur in geringem Maße auf das Airbagmodul 4 übertragen.

Eine Kappe 17, die das Airbagmodul gegenüber dem Fahrgastraum abdeckt, ist über die Verbindungsbleche 13 mit dem Lenkradskelett 2 verbunden. Die Verbindung zwischen der Kappe 17 und den Verbindungsblechen 13 erfolgt in der Weise, daß diese an ihrem oberen Ende 18 hakenförmig umgebogen sind und mit diesem Ende in Durchbrüchen 19 der Kappe 17 verrastet sind. Die Kappe steht somit ohne Schwingungselemente mit dem Lenkradskelett 2 in Verbindung und schwingt beim Auftreten von Vibrationen etwa in der gleichen Weise wie das Lenkrad. Dadurch ist zwischen der Kappe 17 und der Oberfläche des Lenkrades kaum eine Relativbewegung vorhanden, so daß ein Schlitz 20 zwischen der Kappe 17 und dem Lenkrad 1 klein sein kann, wodurch das Aussehen des Lenkrades verbessert wird.

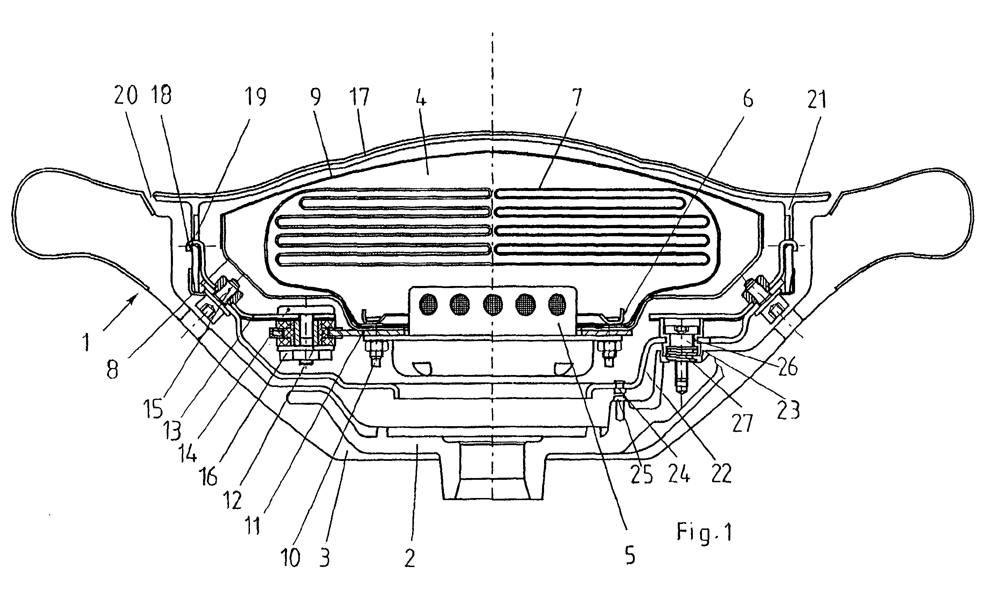

Diese erfindungsgemäße Lagerung kann sowohl bei einem fest mit dem Lenkrad verbundenen Airbagmodul als auch bei einem Airbagmodul angewendet werden, das zur Betätigung der Hupe (floating horn) gegenüber dem Lenkradskelett verschiebbar angeordnet ist, wie es in der Figur 1 dargestellt ist. Dort ist die Kontaktbrücke 22 mit einem elektrischen Kontakt 24 in Richtung des Lenkradskeletts 2 mit einem elektrischen Gegenkontakt 25 verschiebbar. Die Verschiebung der Kontaktbrücke 22 wird dadurch ermöglicht, daß sie im Bereich der Schrauben 23 Buchsen 26 aufweist, die auf den Schrauben 23 entgegen dem Druck einer Feder 27 verschiebbar sind. Bei Druck auf die Kappe 17 wird deshalb die Kontaktbrücke 22 zusammen mit dem Airbagmodul 4 verschoben, bis sich der Kontakt 24 und der Gegenkontakt 25 berühren und dadurch die Hupe betätigt wird.

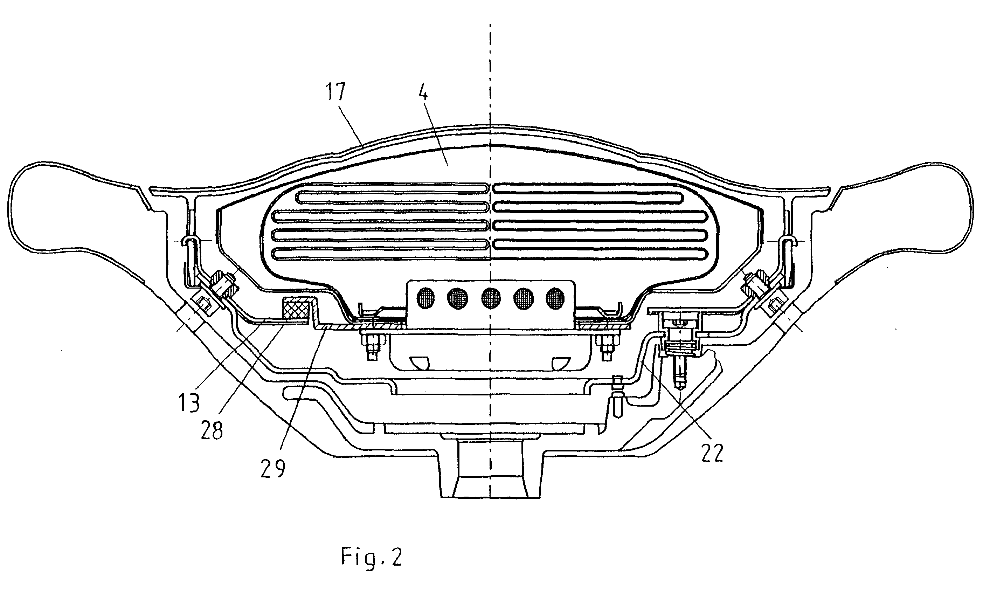

Beim Ausführungsbeipiel der Fig. 2 sind auf den Verbindungsblechen 13 drei elastische Elemente 28 als Kopplungselemente angeordnet, von denen in der Fig. 2 nur ein Element sichtbar ist. Auf diesen elastischen Elementen liegen Trägerbleche 29 auf. Die Verbindung der elastischen Elemente mit den Verbindungsblechen und den Trägerblechen erfolgt z.B. mittels Schrauben oder Kleber. Die elastischen Elemente bestehen aus Gummi und sind in ihrer Härte auf die Masse des schwingenden Airbagmoduls 4 so abgestimmt, daß durch eine Phasenverschiebung der Schwingung des Airbagmoduls 4 die Eigenfrequenz des Gesamtsystems, das insbesondere aus dem Airbagmodul 4, der Kontaktbrücke 22, den Verbindungsblechen 13 und der Kappe 17 besteht, in Bereiche verschoben wird, die im Kraftfahrzeug unkritisch sind.

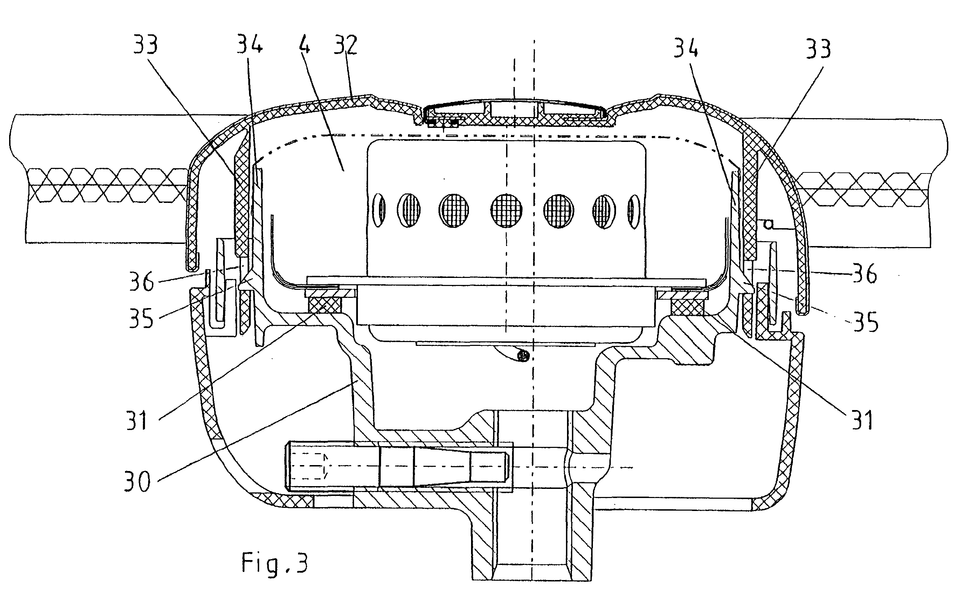

Beim Ausführungsbeispiel der Fig. 3 ist die Lenkradnabe als Generatorträger 30 ausgebildet. Auf diesem ist das Airbagmodul 4 unter Zwischenlage elastischer Elemente 31 befestigt. Die Kappe 32 weist Stege 33 bzw. einen umlaufenden Rand auf, der der Befestigung der Kappe am Lenkrad dient. Zu diesem Zweck sind den Stegen 33 entsprechende Stege 34 am Generatorträger zugeordnet. Diese weisen Ausstülpungen 35 auf, die in Schlitze 36 der Stege 33 der Kappe eingreifen. Bei der Montage der Kappe verformen sich die Stege 33 elastisch, so daß diese über die Ausstülpungen 35 geschoben werden können. Wenn die Ausstülpungen in die Schlitze 36 eingreifen federn die Stege 33 zurück und die Kappe ist mit dem Generatorträger 30 verbunden.

Bei dieser Anordnung kann wegen der elastischen Elemente 31 die bei bekannten Lenkrädern an der Lenkradnabe vorgesehene zusätzliche Masse zur Beeinflussung des Schwingungsverhaltens entfallen.

## Patentansprüche

1. Lenkrad mit Airbagmodul, das durch eine an der Lenkradoberseite vom Lenkrad getrennt verlaufende Kappe gegenüber dem Fahrgastraum abgedeckt ist,
**dadurch gekennzeichnet,**
**daß** das Airbagmodul (4) und die Kappe (17) getrennt voneinander im Bereich des Airbagmoduls am Lenkrad (1) befestigt sind, wobei das Airbagmodul (4) über mindestens ein Schwingungs- oder elastisches Element (12, 28, 31) mit dem Lenkrad (1) verbunden ist.

2. Lenkrad nach Anspruch 1, **dadurch gekennzeichnet, daß** als Baugruppen des Airbagmoduls (4) ein Gasgenerator (5), ein Gassackhalteblech (6), ein Gassack (7) und ein Faltraumbegrenzungsblech (8) mit Abdeckung (9) an mindestens einem Trägerblech (11) befestigt sind, das über mindestens je eines der Schwingungs- oder elastischen Elemente (12, 28, 31) mit dem Lenkrad (1) verbunden ist.

3. Lenkrad nach Anspruch 1 oder 2, **dadurch gekennzeichnet, daß** zwischen dem Lenkrad (1) und jedem Schwingungs- oder elastischen Element (12, 28) ein Verbindungsblech (13) vorgesehen ist.

4. Lenkrad nach mindestens einem der vorhergehenden Ansprüche, **dadurch gekennzeichnet, daß** jedes Schwingungselement (12) buchsenförmig ausgebildet ist und auf einer Schraube (14) mit Mutter (16) angeordnet ist, wobei zwischen dem Schwingungselement (12) und dem Schraubenkopf oder der Mutter (16) ein Generatorträgerblech als Verbindungsblech (13) befestigt ist, das mit dem Lenkradskelett (2) verbunden ist und an dem die Kappe (17) befestigt ist.

5. Lenkrad nach Anspruch 4, **dadurch gekennzeichnet, daß** die Verbindungsbleche (13) an ihrem oberen Ende (18) hakenförmig umgebogen sind, und daß die Kappe (17) einen in das Lenkrad (1) hineinragenden Rand (21) mit Durchbrüchen (19) aufweist, in denen die oberen Enden (18) der Verbindungsbleche (13) verrastet sind.

6. Lenkrrad nach mindesten einem der Ansprüche 3 bis 5, **dadurch gekennzeichnet, daß** jedes Verbindungsblech (13) an einer Kontaktbrücke (22) befestigt ist, die ihrerseits mit dem Lenkradskelett (2) verbunden ist.

7. Lenkrad nach mindestens einem der Ansprüche 1 bis 3, **dadurch gekennzeichnet, daß** drei elastische Elemente (28) im gleichen Winkelabstand zueinander angeordnet sind, die sich zwischen mindestens einem Trägerblech (11) und mindestens einem Verbindungsblech (13) erstrecken.

8. Lenkrad nach mindestens einem der Ansprüche 1 bis 3, **dadurch gekennzeichnet, daß** ein ringförmiges elastisches Element zwischen der als Generatorträger (30) ausgestalteten Lenkradnabe und dem Airbagmodul (4) angeordnet ist.

9. Lenkrad nach mindestens einem der Ansprüche 1 bis 3 sowie 7 und 8, **dadurch gekennzeichnet, daß** der Dämpfungswert der elastischen Elemente (28, 31) so auf die Masse des schwingenden Airbagmoduls (4) abgestimmt ist, daß durch eine Phasenverschiebung der Schwingung des Airbagmoduls (4) die Eigenfrequenz des Gesamtsystems in unkritische Bereiche verschoben wird.

10. Lenkrad nach mindestens einem der Ansprüche 1 bis 3 sowie 7 bis 9, **dadurch gekennzeichnet, daß** die elastischen Elemente (28, 31) aus Elastomer hergestellt sind.

## Claims

1. Steering wheel with airbag module which is covered from the passenger cell by a cap which runs separately from the steering wheel on the upper side thereof,
**characterised in that**
the airbag module (4) and the cap (17) are fixed on the steering wheel (1) separately from each other in the area of the airbag module whereby the airbag module (4) is connected to the steering wheel (1) through at least one oscillating or elastic element (12, 28, 31).

2. Steering wheel according to claim 1 **characterised in that** as subassemblies of the airbag module (4) a gas generator (5), a gasbag retaining plate (6), a gasbag (7) and a folding chamber restricting plate (8) with cover (9) are fixed on at least one support plate (11) which is connected to the steering wheel (1) by at least one of the oscillating or elastic elements (12, 28, 31).

3. Steering wheel according to claim 1 or 2 **characterised in that** a connecting plate (13) is provided between the steering wheel (i) and each oscillating or elastic element (12, 28).

4. Steering wheel according to at least one of the preceding claims **characterised in that** each oscillating element (12) is formed bush-like and is mounted on a screw (14) with nut (16) wherein between the oscillating element (12) and the screw head or nut (16) a generator support plate is fixed as a connecting plate (13) which is connected to the steering wheel skeleton (2) and on which the cap (17) is fixed.

5. Steering wheel according to claim 4 **characterised in that** the connecting plates (13) are bent round hook shaped at their upper end (18) and that the cap (17) has an edge (21) projecting into the steering wheel (1) and provided with apertures (19) in which the upper ends (18) of the connecting plates (13) are locked.

6. Steering wheel according to at least one of claims 3 to 5 **characterised in that** each connecting plate (13) is fixed on a contact bridge (2) which in turn is connected to the steering wheel skeleton (2).

7. Steering wheel according to at least one of claims 1 to 3 **characterised in that** three elastic elements (28) are arranged at even angular spacing relative to each other and extend between at least one support plate (11) and at least one connecting plate (13).

8. Steering wheel according to at least one of claims 1 to 3 **characterised in that** a ring-shaped elastic element is mounted between the steering wheel hub formed as the generator support (30) and the airbag module (4).

9. Steering wheel according to at least one of claims 1 to 3 and 7 and 8 **characterised in that** the damping value of the elastic elements (28, 31) is matched to the mass of the vibrating airbag module (4) so that through a phase displacement of the oscillation of the airbag module (4) the inherent frequency of the overall system is displaced into non-critical areas.

10. Steering wheel according to at least one of claims 1 to 3 and 7 to 9 **characterised in that** the elastic elements (28, 31) are made of elastomer.

## Revendications

1. Volant avec module d'airbag, qui est recouvert par rapport à l'habitacle par une coiffe s'étendant de façon séparée du volant sur la face supérieure du volant, **caractérisé en ce que**
le module d'airbag (4) et la coiffe (17) sont fixés séparément l'un de l'autre dans la zone du module d'airbag sur le volant (1), le module d'airbag (4) étant relié au volant (1) via au moins un élément oscillant ou élastique (12, 28, 31).

2. Volant selon la revendication 1, **caractérisé en ce que** des groupes structurels du module d'airbag (4), que sont un générateur de gaz (5), une tôle de maintien de coussin à gaz (6), un coussin à gaz (7) et une tôle de délimitation d'espace de pliage (8) avec un recouvrement (9) sont fixés sur au moins une tôle porteuse (11) qui est reliée au volant (1) via l'un au moins des éléments oscillants ou élastiques (12, 28, 31).

3. Volant selon l'une ou l'autre des revendications 1 et 2, **caractérisé en ce qu'**une tôle de liaison (13) est prévue entre le volant (1) et chaque élément oscillant ou élastique (12, 28).

4. Volant selon l'une au moins des revendications précédentes, **caractérisé en ce que** chaque élément oscillant (12) est réalisé en forme de douille et est agencé sur une vis (14) au moyen d'un écrou (16), une tôle porteuse de générateur étant fixée à titre de tôle de liaison (13) entre l'élément oscillant (12) et la tête de vis ou l'écrou (16), laquelle est reliée à l'ossature de volant (2) et sur laquelle est fixée la coiffe (17).

5. Volant selon la revendication 4, **caractérisé en ce que** les tôles de liaison (13) sont repliées en forme de crochet à leur extrémité supérieure (18), et **en ce que** la coiffe (17) comprend une bordure (21) qui se projette dans le volant (1) et qui présente des traversées (19) dans lesquelles sont enclenchées les extrémités supérieures (18) des tôles de liaison (13).

6. Volant selon l'une au moins des revendications 3 à 5, **caractérisé en ce que** chaque tôle de liaison (13) est fixée sur un pont de contact (22) qui est relié à son tour à l'ossature de volant (2).

7. Volant selon l'une au moins des revendications 1 à 3, **caractérisé en ce qu'**il est prévu trois éléments élastiques (28) à distance angulaire égale les uns des autres qui s'étendent entre au moins une tôle porteuse (11) et au moins une tôle de liaison (13).

8. Volant selon l'une au moins des revendications 1 à 3, **caractérisé en ce qu'**un élément élastique annulaire est agencé entre le moyeu de volant réalisé sous forme de support de générateur (30) et le module d'airbag (4).

9. Volant selon l'une au moins des revendications 1 à 3 ainsi que 7 et 8, **caractérisé en ce que** la valeur d'amortissement des éléments élastiques (28, 31) est adaptée à la masse du module d'airbag oscillant (4) de telle sorte que la fréquence propre de l'ensemble du système est déportée dans des plages non critiques par un déphasage des oscillations du module d'airbag (4).

10. Volant selon l'une au moins des revendications 1 à 3, et 7 à 9, **caractérisé en ce que** les éléments élastiques (28, 31) sont réalisés en élastomère.
